Europäisches Patentamt

European Patent Office

Office européen des brevets

(11) Veröffentlichungsnummer: **0 308 594 B1**

## (12) EUROPÄISCHE PATENTSCHRIFT

(45) Veröffentlichungstag der Patentschrift: **30.10.91**

(51) Int. Cl.⁵: **F16B 13/06**

(21) Anmeldenummer: **88111028.2**

(22) Anmeldetag: **11.07.88**

(54) **Spreizdübel.**

(30) Priorität: **09.09.87 DE 3730211**

(43) Veröffentlichungstag der Anmeldung:
**29.03.89 Patentblatt 89/13**

(45) Bekanntmachung des Hinweises auf die
Patenterteilung:
**30.10.91 Patentblatt 91/44**

(84) Benannte Vertragsstaaten:
**AT BE CH ES FR GB GR IT LI NL SE**

(56) Entgegenhaltungen:
**EP-A- 0 188 172**
**DE-A- 2 418 598**
**GB-A- 2 153 949**

(73) Patentinhaber: **fischerwerke Artur Fischer
GmbH & Co. KG
Weinhalde 14 - 18
W-7244 Waldachtal 3/Tumlingen(DE)**

(72) Erfinder: **Fischer, Artur, Prof. Dr. h. c.
Weinhalde 34
W-7244 Waldachtal 3/Tumlingen(DE)**

Rank Xerox (UK) Business Services

## Beschreibung

Die Erfindung betrifft einen Spreizdübel gemäß der Gattung des Anspruches 1.

Aus der EP-A-0 188 172 ist ein metallischer Spreizdübel mit Spreizhülse und einem Gewindeschaft bekannt, der an seinem Schaftende einen in die Spreizhülse einziehbaren Spreizkegel besitzt. Das Einziehen des Spreizkegels erfolgt in der Weise, daß eine am anderen Ende des Gewindeschaftes angeordnete Mutter sich an dem zu befestigenden Gegenstand abstützt, und durch Aufschrauben der Mutter der Gewindeschaft mit Spreizkegel in Richtung Bohrlochmündung gezogen wird. Die Spreizhülse bleibt dabei ortsfest im Bohrloch fixiert und wird durch den Spreizkegel aufgespreizt. Um das ansich der doppelten Wandstärke der Spreizhülse entsprechende maximale Aufspreizmaß zu erhöhen, ist auf dem Spreizkegel dieses bekannten Dübels zusätzlich eine aufweitbare Kegelhülse angeordnet. Durch unterschiedliche Winkel an der Kegelhülse wird erreicht, daß zuerst der Spreizkegel in die Kegelhülse einläuft, und danach die Kegelhülse mit Spreizkegel die Spreizhülse aufspreizt.

Ein solcher Ablauf ist jedoch nur bei einer Verankerung des bekannten Dübels in weichem Baustoff möglich. In hartem Baustoff wie Beton kommt es durch den hohen Spreizdruck zwischen Spreizkegel und Kegelhülse einerseits sowie zwischen Kegelhülse und Spreizhülse andererseits schon in einem frühen Stadium zu derart hohen Reibungskräften, die ein Kaltverschweißen der aus Metall bestehenden Teile bewirken. Damit ist weder eine ordnungsgemäße Verankerung noch ein Nachspreizen erreichbar, wenn beispielsweise durch Rißbildung eine Bohrlocherweiterung eintritt.

Die DE-A-2 418 598 zeigt einen Spreizanker mit einem Spreizkörper und einer Spreizhülse sowie mit einer zusätzlichen Hülse, die mit einem Teil als Spreizhülse und mit ihrem anderen Teil als Spreizkörper wirkt. Beim Einziehen des Spreizkörpers wird sowohl die Hülse als auch über den an dieser Hülse angeordneten Spreizkegel die Spreizhülse aufgespreizt. Auch bei dieser Lösung ist jedoch die Hauptlast der Verankerung von der unmittelbar vom Spreizkörper aufgespreizten Hülse zu tragen, so daß es durch den direkten Kontakt der beiden Metallteile, insbesondere bei einer Verankerung in harten Baustoffen, zur Kaltverschweißung mit den geschilderten Folgen kommen kann.

Der Erfindung liegt die Aufgabe zugrunde, einen Spreizdübel zu schaffen, bei dem eine gute Gleiteigenschaft zwischen dem metallischen Spreizkegel und der metallischen Spreizhülse erreicht wird.

Die Lösung dieser Aufgabe wird bei einem Spreizdübel der eingangs genannten Gattung durch die im Kennzeichen des Anspruches 1 angegebenen Merkmale erreicht.

Die Gleithülse besteht aus einem beim Spreizvorgang verformbaren Material, so daß ein Teil des Gleithülsenmaterials von der Spreizhülse mitgenommen und entlang der Konusfläche zerquetscht wird. Die Poren und Riefen der Konusfläche des Spreizkegels sowie der Spreizhülse werden dabei mit Material der Gleithülse zugesetzt und somit geglättet. Dies hat zur Folge, daß die Gleitfähigkeit zwischen Spreizkegel und Spreizhülse in hohem Maße gesteigert und damit auch das Nachspreizverhalten verbessert wird.

Bei der bevorzugten Ausführungsform ist vorgesehen, daß die Gleithülse am Anschlag über die angrenzende Mantelfläche des Speizkegels übersteht. Das überstehende Material wird beim Spreizvorgang aufgrund hoher Pressung zwischen Spreizhülse und Gleithülse entlang der Konusfläche des Spreizkegels verteilt. Je nach verwendetem Gleithülsenmaterial und Überstand der Gleithülse kann ein mehr oder weniger dünner Gleitfilm zwischen Spreizkegel und Spreizhülse erzielt werden. Besonders gute Versuchsergebnisse wurden mit einer aus Polyamid gefertigten Gleithülse erzielt, die eine der Steigung des Spreizkegels entsprechende konische Umfangsfläche besitzt.

Als Anschlag, an dem die Gleithülse vor dem Spreizkegel gehalten wird, dient vorzugsweise die Ringfläche eines den Spreizkegel begrenzenden Absatzes. An diesem Absatz liegt die Gleithülse mit ihrer dem Dübelschaft abgewandten Stirnseite an.

Die Spreizhülse besitzt eine konische Innenfläche, die an die Steigung des Spreizkegels angepaßt sein kann. Auch die konische Innenfläche der Spreizhülse begünstigt den gewünschten Effekt, daß ein Teil des Materials der Gleithülse gleichmäßig und hauchdünn beim Spreizvorgang über den Spreizkegel verteilt wird.

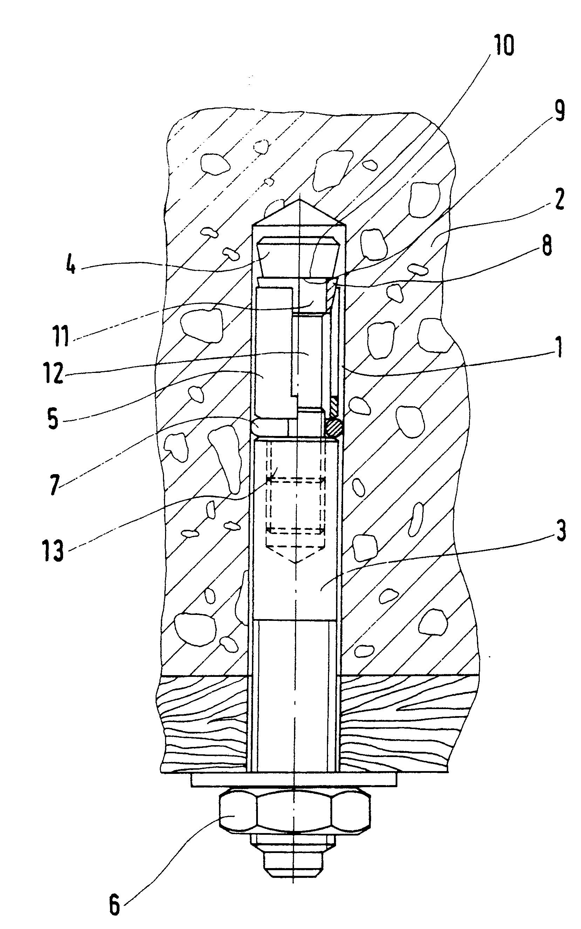

Die Erfindung wird anhand eines in der Zeichnung dargestellten Ausführungsbeispiels näher erläutert.

Der in der Zeichnung dargestellte metallische Spreizdübel ist in das Bohrloch 1 eines Mauerwerks 2 eingesetzt. Der Spreizdübel besteht aus einem Schaft 3, einem mit dem Schaft 3 verbundenen Spreizkegel 4, einer Spreizhülse 5 und einer Befestigungsschraube 6. Zwischen Spreizhülse 5 und Dübelschaft 3 befindet sich ein als Federring 7 ausgebildetes Sicherungselement, welches die Spreizhülse 5 vor dem Aufspreizen im Bohrloch 1 fixiert.

Zwischen Spreizkegel 4 und Spreizhülse 5 ist eine Gleithülse 8 angeordnet, die sich an einer Ringfläche 9 eines den Spreizkegel 4 begrenzenden Absatzes 10 abstützt. Die Ringfläche 9 dient somit als Anschlag für die Gleithülse 8. Die Gleithülse 8 besitzt einen Innendurchmesser, der dem Durchmesser des Abschnitts 11 des durch die Spreizhülse hindurchgreifenden Schaftes 12 entspricht.

Der Spreizkörper mit seinem Spreizkegel 4 ist über den Schaft 12 und einem Gewindeabschnitt 13 mit dem Dübelschaft 3 starr verbunden. Wird nun die Befestigungsschraube 6 angezogen, so wird dadurch der Dübelschaft 3 zusammen mit dem Spreizkegel 4 in Richtung Bohrlochöffnung bewegt. Da die Spreizhülse 5 durch das Sicherungselement 7 ortsfest im Bohrloch fixiert ist, dringt die Gleithülse 8 und der Spreizkegel 4 in die Spreizhülse 5 ein und weiten diese auf, bis sich die Spreizhülse 5 mit einem gewünschten Anpreßdruck an die Bohrlochwand angelegt hat.

Beim Spreizvorgang wird ein Teil des im Bereich des Anschlags 10 überstehenden Materials der Gleithülse 8 unter hohem Druck von der Spreizhülse 5 über die Konusfläche des Spreizkegels 4 verteilt. Dabei werden zumindest die Poren der Konusfläche zugesetzt, wodurch sich die Gleitfähigkeit zwischen Spreizhülse 5 und Spreizkegel 4 stark erhöht. Dies hat nicht nur zur Folge, daß beim Spreizvorgang ein geringeres Drehmoment an der Befestigungsschraube 6 aufgewendet werden muß, vielmehr wird auch das Nachspreizverhalten bei sich nachträglich erweiterndem Bohrloch 1 stark verbessert. Das Sicherungselement 7 muß geringere Haltekräfte besitzen, um ein Herausrutschen der Spreizhülse 5 aus dem Bohrloch 1 sicher zu vermeiden.

Im Ausführungsbeispiel besteht die Gleithülse 8 aus Polyamid, während die übrigen Teile des Spreizdübels aus Metall gefertigt sind.

## Patentansprüche

1. Spreizdübel mit metallischer Spreizhülse (5), einem metallischen Spreizkegel (4) an einem Ende und mit einem als Schraube (6) oder dgl. ausgebildeten Befestigungsmittel am anderen Ende, wobei der Spreizkegel unter Zwischenschaltung einer zwischen Spreizkegel und Spreizhülse angeordneten Gleithülse (8) über das Befestigungsmittel in die Spreizhülse einziehbar ist, **dadurch gekennzeichnet, daß** am Spreizkegel (4) ein in Richtung des Befestigungsmittels weisender Anschlag (9) ausgebildet ist, an dem die Gleithülse (8) anliegt, wobei die Gleithülse aus einem derartig verformbaren Material besteht, daß beim Spreizvorgang ein Teil des Materials der Gleithülse unter hohem Druck von der Spreizhülse über die Konusfläche des Spreizkonus verteilt wird und sich dabei Poren in der Konusfläche zusetzen.

2. Spreizdübel nach Anspruch 1, **dadurch ge-**

**kennzeichnet,** daß die Gleithülse (8) am Anschlag (9) über die angrenzende Mantelfläche des Spreizkegels (4) übersteht.

3. Spreizdübel nach einem der Ansprüche 1 oder 2, **dadurch gekennzeichnet,** daß die Gleithülse (8) eine konische Umfangsfläche hat.

4. Spreizdübel nach Anspruch 3, **dadurch gekennzeichnet,** daß die Steigungen von Spreizkegel (4) und Gleithülse (8) annähernd gleich sind.

5. Spreizdübel nach einem der vorhergehenden Ansprüche, **dadurch gekennzeichnet,** daß der Anschlag die Ringfläche (9) eines den Spreizkegel (4) begrenzenden Absatzes (10) ist.

6. Spreizdübel nach einem der vorhergehenden Ansprüche, **dadurch gekennzeichnet,** daß die Spreizhülse (5) eine an die Steigung des Spreizkegels (4) angepaßte konische Innenfläche hat.

## Claims

1. An expansible plug having a metal expansible sleeve (5), a metal expander cone (4) at one end and a fastening means in the form of a screw member (6) or the like at the other end, the expander cone being retractable into the expansible sleeve by way of the fastening means with the interposition of a lubricating sleeve (8) arranged between expander cone and expansible sleeve, characterised in that formed on the expander cone (4) is a stop member (9), facing in the direction of the fastening means, against which the lubricating sleeve (8) rests, the lubricating sleeve comprising a material that is deformable in such a manner that during the expansion process some of the material of the lubricating sleeve is spread along the conical surface of the expander cone by the expansible sleeve under high pressure and pores in the conical surface are filled as a result.

2. An expansible plug according to claim 1, characterised in that the lubricating sleeve (8) on the stop member (9) projects beyond the adjoining surface of the expander cone (4).

3. An expansible plug according to claim 1 or claim 2, characterised in that the lubricating sleeve (8) has a conical peripheral surface.

4. An expansible plug according to claim 3, characterised in that the tapers of the expander cone (4) and of the lubricating sleeve (8) are approximately the same.

5. An expansible plug according to any one of the preceding claims, characterised in that the stop member is the annular surface (9) of a shoulder (10) forming a boundary of the expander cone (4).

6. An expansible plug according to any one of the preceding claims, characterised in that the expansible sleeve (5) has a conical inner surface that matches the taper of the expander cone (4).

**Revendications**

1. Cheville à expansion présentant une douille métallique d'expansion (5), un cône métallique d'expansion (4) à une extrémité et, à l'autre extrémité, un moyen de fixation conçu sous forme d'une vis (6) ou analogue, étant précisé que, par l'intermédiaire du moyen de fixation, on peut tirer le cône d'expansion pour le faire entrer dans la douille d'expansion avec interposition d'une douille de glissement (8) disposée entre le cône d'expansion et la douille d'expansion, cheville caractérisée par le fait que sur le cône d'expansion (4) est prévue une butée (9), qui est orientée dans la direction du moyen de fixation et contre laquelle s'appuie la douille de glissement (8), étant précisé que la douille de glissement est constituée d'un matériau qui peut se déformer de façon telle que, lors du processus d expansion, une partie du matériau de la douille de glissement, sous la pression élevée exercée par la douille d'expansion, se répartit sur la surface conique du cône d'expansion et que les pores de la surface conique y sont alors obstrués.

2. Cheville à exansion selon la revendication 1, caractérisée par le fait qu'à la butée (9), la douille de glissement (8) déborde au-delà de la surface latérale, voisine, du cône d'expansion (4).

3. Cheville à expansion selon l'une des revendications 1 ou 2, caractérisée par le fait que la douille de glissement (8) a une surface périphérique conique.

4. Cheville à expansion selon la revendication 3, caractérisée par le fait que les pentes du cône d'expansion (4) et de la douille de glissement (8) sont approximativement égales.

5. Cheville à expansion selon l'une des revendications précédentes, caractérisée par le fait que la butée est la surface annulaire (9) d'un gradin (10), qui limite le cône d'expansion (4).

6. Cheville à expansion selon l'une des revendications précédentes, caractérisée par le fait que la douille d'expansion (5) a une surface intérieure conique adaptée à la pente du cône d'expansion (4).